# EUROPÄISCHE PATENTANMELDUNG

(11) **EP 3 513 966 A1**
(43) Veröffentlichungstag der Anmeldung: **24.07.2019**
(21) Anmeldenummer: 18152702.9
(22) Anmeldetag: 22.01.2018
(51) Int. Cl.: B32B 21/04, B32B 21/08, B32B 27/42, B32B 3/20

(54) **BODENPLATTE ZUR VERWENDUNG ALS LADERAUMBODEN UND VERFAHREN ZUR HERSTELLUNG EINER BODENPLATTE**

(71) Anmelder: Air Bamboo Industrial GmbH, 16225 Eberswalde (DE)
(72) Erfinder: KUHMANN, Jochen, 10783 Berlin (DE); ALBRECHT, Matthias, 10823 Berlin (DE); KUJUS-TENEKEDSHIJEW, Roman, 17192 Federow (DE)
(74) Vertreter: Schulz Junghans Patentanwälte PartGmbB

(57) **Zusammenfassung**

Die Erfindung betrifft eine Bodenplatte (1) zur Verwendung als Laderaumboden, aufweisend eine Mittellage (10) und wenigstens eine Deckschicht (20) zur Verstärkung der Mittellage (10), wobei die Deckschicht (20) aus einem Kunstharz gebildet ist, wobei die Mittellage (10) wenigstens eine Massivholzschicht (11) aus Massivholz aufweist.

Weiterhin betrifft die Erfindung ein Verfahren zur Herstellung der erfindungsgemäßen Bodenplatte (1), wobei mit Kunstharz getränkte Papiere separat von der Mittellage (10) zum Bilden der Deckschicht (20) verpresst werden, und wobei die Deckschicht (20) nach dem Aushärten mit der Mittellage (10) verbunden wird.

## Beschreibung

Die Erfindung betrifft eine Bodenplatte zur Verwendung als Laderaumboden sowie ein Verfahren zur Herstellung einer erfindungsgemäßen Bodenplatte.

Derartige Bodenplatten dienen z.B. in Laderäumen von LKWs, Anhängern und Containern als lasttragende Elemente.

Nach dem Stand der Technik werden in Laderäumen Bodenplatten aus Sperrholz verwendet, die mit einer Phenolharzoberfläche beschichtet sind. Dafür werden z.B. Birkensperrhölzer in den Stärken 27 mm (mit 19 Lagen) und 35 mm (mit 25 Lagen) eingesetzt.

Zur Herstellung solcher Sperrhölzer werden von den Stämmen entlang Ihrer Längsachse 1,5 mm starke Endlosfurniere geschält. Diese Furniere werden zugeschnitten und getrocknet. Fehlerfreie Furniere finden in den äußeren Lagen der Sperrhölzer Verwendung, um dort höhere Festigkeiten und eine homogene Oberfläche zu gewährleisten. Furniere mit Fehlern (Äste, Farbe, Löcher usw.) werden hingegen in der Mittellage eingesetzt. Großflächige Fehler werden herausgeschnitten und die Furniere werden zusammengefügt.

Die getrockneten und zugeschnittenen Furniere werden vollflächig mit Phenol- oder Harnstoffformaldehydleimen beleimt, zusammengelegt, wobei die Lagen abwechselnd oder nach einem Muster zueinander um 90° gedreht werden, und heiß verpresst.

Im Anschluss werden als Oberfläche mit Phenolharz getränkte Papiere ein- oder mehrlagig heiß auf die Oberfläche gepresst. Dabei verbindet sich das Phenolharz mit der Holzoberfläche und härtet aus. Die befahrbare Oberfläche wird durch eine Sieblage beim Beschichten aufgeraut, um eine rutschhemmende Oberfläche zu erzeugen.

Solche Bodenplatten aus Sperrholz haben den Nachteil, dass ihr Herstellungsverfahren aufwändig ist und einen relativ hohen Leimbedarf erfordert. Außerdem führt die wechselnde Ausrichtung der Holzfasern zu einer geringeren mechanischen Belastbarkeit. Schließlich müssen die Ausgangssortimente des Rundholzes astfrei und gradschaftig sein, so dass relativ teure Rundhölzer verwendet werden müssen.

Daher ergibt sich die Aufgabe, eine Bodenplatte zur Verwendung als Laderaumboden zur Verfügung zu stellen, welche im Hinblick auf die zuvor genannten Nachteile des Standes der Technik verbessert ist.

Diese Aufgabe wird durch den Gegenstand der Ansprüche 1 (Bodenplatte) und 15 (Herstellungsverfahren) gelöst. Vorteilhafte Ausführungsformen der Erfindung sind in den Unteransprüchen 2 bis 14 angegeben und werden im Folgenden beschrieben.

Ein erster Aspekt der Erfindung betrifft eine Bodenplatte zur Verwendung als Laderaumboden, aufweisend eine Mittellage und wenigstens eine Deckschicht zur Verstärkung der Mittellage, wobei die Deckschicht aus einem Kunstharz gebildet ist, und wobei die Mittellage wenigstens eine Massivholzschicht aus Massivholz aufweist.

Der Begriff Bodenplatte bezeichnet dabei ein plattenförmiges Element, das dazu ausgebildet ist, in einem Laderaum, z.B. eines Lastkraftwagens (LKW), LKW-Anhängers, Trailers oder Containers, als lasttragendes Element verwendet zu werden. Das heißt, die erfindungsgemäße Bodenplatte weist eine ausreichende mechanische Stabilität auf, um Lasten zu tragen, ohne dass die Bodenplatte beschädigt wird bzw. bricht.

Für den Einsatz in Laderäumen müssen die Bodenplatten eine robuste und beständige Oberfläche aufweisen und müssen mechanischen und klimatischen Einflüssen dauerhaft standhalten. Insbesondere müssen solche Bodenplatten Vorgaben der Hersteller oder Normen wie ISO 1496 erfüllen.

Der Begriff Massivholz bezeichnet im Kontext dieser Erfindung Holz, dessen Gefüge nicht mechanisch oder mechanisch-chemisch verändert ist. Das heißt insbesondere, dass Holzwerkstoffe wie Spanplatten, Faserwerkstoffe oder Sperrholz kein Massivholz im Sinne der vorliegenden Erfindung sind. Massivholz kann im Zusammenhang der vorliegenden Erfindung auch als Vollholz bezeichnet werden. Der Querschnitt des Massivholzes wird insbesondere aus einem Baumstamm herausgearbeitet (z.B. durch Schneiden oder Sägen) und optional spanabhebend (z.B. durch Bohren, Fräsen und/oder Hobeln) weiterverarbeitet. Bei Massivholz kann es sich insbesondere um Schnittholz oder Rundholz handeln.

Dabei bezeichnet Rundholz Rohholz in runder Form, insbesondere nicht weiter verarbeitete Stammstücke gefällter Bäume.

Schnittholz wird aus Rundholz durch Sägen, insbesondere parallel zur Stammachse, hergestellt. Weiterhin weist Schnittholz insbesondere einen annährend rechteckigen Querschnitt auf. Schnittholz weist außerdem insbesondere eine Dicke von 6 mm oder mehr auf.

Die Mittellage kann eine einzige Schicht aus Massivholz oder mehrere verbundene Massivholzschichten aufweisen.

Im Fall mehrerer verbundener Massivholzschichten weist die Mittellage insbesondere eine Dreischicht-Platte (auch als 3S-Platte oder bei entsprechender Dicke als Cross Laminated Timber, CLT, bezeichnet) auf oder ist durch diese gebildet. Solche Dreischichtplatten werden aus drei Schichten (auch als Lamellen bezeichnet) massiven Holzes verleimt, wobei die Faserrichtungen der benachbarten Schichten in einem Winkel von 90° zueinander verlaufen. Die Lamellen werden insbesondere direkt nach Einschnitt von Stammware durch das Auftrennen von Schnittholzsortimenten erzeugt und dann getrocknet, oder aus getrockneten Schnittholzsortimenten gesägt. Im nächsten Schritt werden die Lamellen insbesondere vierseitig gehobelt, sortiert und beleimt, z.B. mittels modifizierter MUF-Harze, und heiß miteinander verpresst.

Durch die Verwendung von Massivholz lässt sich die Bodenplatte besonders einfach und kostengünstig herstellen, insbesondere im Vergleich zu Sperrholz und anderen Holzwerkstoffen. Bei der Herstellung der Mittellage wird insbesondere verglichen mit Holzwerkstoffen eine geringere Menge an Leim benötigt. Weiterhin müssen bei Massivholzschichten im Gegensatz zu Sperrholz weniger Fehler im Holz herausgeschnitten werden. Im Gegensatz zu Ausgangsmaterial für Sperrholz muss das verwendete Massivholz außerdem nicht komplett astfrei und gradschaftig sein und kann geringere Durchmesser aufweisen, so dass relativ günstiges Ausgangsmaterial verwendet werden kann.

Zudem weist Massivholz durch die parallele Ausrichtung der Holzfasern eine besonders hohe Festigkeit und mechanische Belastbarkeit auf.

Die Mittellage weist insbesondere zwei gegenüberliegende Flächen auf. Dabei ist insbesondere nur eine der Flächen mit der Deckschicht beschichtet oder beide Flächen sind mit einer jeweiligen Deckschicht beschichtet.

Die wenigstens eine Deckschicht bedeckt zumindest teilweise, insbesondere vollständig, eine der besagten Flächen der Mittellage und dient der Verstärkung der Mittellage, so dass die mechanischen Eigenschaften der Bodenplatte und somit die Lasttragekapazität der Bodenplatte verbessert sind bzw. ist.

Durch die Kombination einer Mittellage aus wenigstens einer Massivholzschicht mit einer Deckschicht aus Kunstharz lassen sich überraschenderweise Bodenplatten herstellen, die im Vergleich zu Bodenplatten nach dem Stand der Technik eine deutlich höhere mechanische Belastbarkeit bei gleichzeitig geringerem Gewicht aufweisen.

Zusätzlich zu der Verstärkungsfunktion kann die wenigstens eine Deckschicht zum Schutz der Mittellage vor Verkratzen oder Abrieb dienen.

Die wenigstens eine Deckschicht bildet insbesondere eine Auflagefläche der Bodenplatte, auf der die Lasten in dem Laderaum angeordnet werden können.

Weiterhin kann die wenigstens eine Deckschicht aufgeraut sein, so dass die besagte Auflagefläche der Bodenplatte rutschhemmend ausgebildet ist. Insbesondere kann die Deckschicht durch eine Sieblage aufgeraut sein.

Bei dem Kunstharz handelt es sich insbesondere um ein Melaminharz oder ein Phenolharz.

Dabei kann es sich bei der Deckschicht um eine HPL (High Pressure Laminate)- oder CPL (Continuous Pressure Laminate) handeln.

Der Begriff ,Rohdichte', insbesondere nach DIN 52182, bezeichnet im Kontext der vorliegenden Spezifikation den Quotienten aus Masse und Volumen einer Holzprobe. Dabei wird die Rohdichte insbesondere gravimetrisch, also durch Vermessen und Wiegen der Holzprobe, bestimmt. Die angegebenen Werte sind auf eine Holzfeuchte von 12 % bis 15 % u bezogen, wobei die Holzfeuchte nach der Darrmethode ermittelt wurde. Dabei steht "u" für die Ausgleichsfeuchte, welche die Probe in der Umgebungsluft (bei 20°C und 65 % relativer Luftfeuchtigkeit) annimmt.

Bei der Darrmethode, insbesondere nach EN 13183-1, wird die Holzprobe gewogen und anschließend bei 103 °C in einem Darrofen bis zur Gewichtskonstanz getrocknet und dann erneut gewogen, wobei das sogenannte Darrgewicht ermittelt wird. Die Gewichtsdifferenz wird auf das Darrgewicht bezogen und ergibt die Holzfeuchte.

Mit dem ,Volumenschwindmaß' ist im Kontext der vorliegenden Spezifikation die maximale Dimensionsänderung vom maximal gequollenen Zustand zum Darrzustand (nach DIN 52184) gemeint.

Weiterhin ist im Kontext der vorliegenden Spezifikation mit dem Begriff 'Biegefestigkeit' die mittels eines Dreipunktbiegeversuchs nach EN310 bestimmte Biegefestigkeit bei einer Holzfeuchte von 12 % bis 15 % u (nach der Darr-Methode bestimmt) gemeint. Die Biegefestigkeit ist dabei abhängig von der Rohdichte, der Struktur des Holzes und der Holzfeuchte.

Mit dem Begriff ,Zugfestigkeit' ist im Kontext der vorliegenden Spezifikation die nach EN 789 bei einer Holzfeuchte von 12 % bis 15 % u (nach der Darr-Methode bestimmt) bestimmte Zugfestigkeit gemeint. Die Zugfestigkeit ist dabei abhängig von der Rohdichte, der Struktur des Holzes und der Holzfeuchte.

Der Begriff ,Elastizitätsmodul' bezeichnet im Kontext der vorliegenden Spezifikation den nach EN310 bei einer Holzfeuchte von 12 % bis 15 % u (Darr-Methode) bestimmten Elastizitätsmodul. Der Elastizitätsmodul ist dabei abhängig von der Rohdichte, der Struktur des Holzes und der Holzfeuchte.

Die mechanischen Parameter von Holz können zwischen unterschiedlichen Proben derselben Baumart, insbesondere aufgrund unterschiedlicher Wachstumsbedingungen, variieren. Im Kontext der vorliegenden Spezifikation ist mit den Begriffen minimale Rohdichte, minimales Volumenschwindmaß, minimale Biegefestigkeit, minimale Zugfestigkeit und minimaler Elastizitätsmodul der jeweils niedrigste gemessene Wert einer Vielzahl an Proben der jeweiligen Holzart gemeint. Mit den Begriffen maximale Rohdichte, maximales Volumenschwindmaß, maximale Biegefestigkeit, maximale Zugfestigkeit und maximaler Elastizitätsmodul ist im Kontext der vorliegenden Spezifikation der jeweils höchste gemessene Wert einer Vielzahl an Proben der jeweiligen Holzart gemeint. Die Begriffe mittlere Rohdichte, mittlere Biegefestigkeit, mittlere Zugfestigkeit und mittlerer Elastizitätsmodul bezeichnet im Kontext der vorliegenden Spezifikation den Mittelwert des jeweiligen Messwertes einer Vielzahl an Proben der jeweiligen Holzart.

Gemäß einer Ausführungsform weist das Massivholz eine Rohdichte (12 %- 15% u, lufttrocken) von 890 kg/m³ oder weniger, insbesondere 750 kg/m³ oder weniger, auf.

Gemäß einer Ausführungsform weist das Massivholz eine Rohdichte (12 %- 15% u, lufttrocken) von 890 kg/m³ oder weniger, insbesondere 730 kg/m³ oder weniger, bevorzugt 680 kg/m³ oder weniger, weiter bevorzugt 670 kg/m³ oder weniger, noch weiter bevorzugt 600 kg/m³ oder weniger, noch weiter bevorzugt 580 kg/m³ oder weniger, noch weiter bevorzugt 560 kg/m³ oder weniger, am meisten bevorzugt 550 kg/m³ oder weniger, auf.

Gemäß einer weiteren Ausführungsform weist das Massivholz eine Rohdichte (12 %- 15% u, lufttrocken) von 330 kg/m³ bis 890 kg/m³, insbesondere von 330 kg/m³ bis 730 kg/m³, bevorzugt von 330 kg/m³ bis 680 kg/m³, weiter bevorzugt von 330 kg/m³ bis 670 kg/m³, noch weiter bevorzugt von 330 kg/m³ bis 600 kg/m³, noch weiter bevorzugt von 330 kg/m³ bis 580 kg/m³, noch weiter bevorzugt von 330 kg/m³ bis 560 kg/m³, am meisten bevorzugt von 330 kg/m³ bis 550 kg/m³, auf.

Gemäß einer weiteren Ausführungsform weist das Massivholz eine Rohdichte (12 %- 15% u, lufttrocken) von 400 kg/m³ bis 600 kg/m³ auf.

Gemäß einer weiteren Ausführungsform weist das Massivholz eine Rohdichte (12 %- 15% u, lufttrocken) von 330 kg/m³ bis 680 kg/m³ auf.

Gemäß einer weiteren Ausführungsform weist das Massivholz eine Rohdichte (12 %- 15% u, lufttrocken) von 400 kg/m³ bis 670 kg/m³ auf.

Gemäß einer weiteren Ausführungsform weist das Massivholz eine Rohdichte (12 %- 15% u, lufttrocken) von 330 kg/m³ bis 890 kg/m³ auf.

Gemäß einer weiteren Ausführungsform weist das Massivholz eine Rohdichte (12 %- 15% u, lufttrocken) von 450 kg/m³ bis 580 kg/m³ auf.

Gemäß einer weiteren Ausführungsform weist das Massivholz eine Rohdichte (12 %- 15% u, lufttrocken) von 560 kg/m³ bis 730 kg/m³ auf.

Gemäß einer weiteren Ausführungsform weist das Massivholz eine Rohdichte (12 %- 15% u, lufttrocken) von 410 kg/m³ bis 560 kg/m³ auf.

Gemäß einer weiteren Ausführungsform weist das Massivholz eine Rohdichte (12 %- 15% u, lufttrocken) von 450 kg/m³ bis 550 kg/m³ auf.

Eine geringe Rohdichte des Massivholzes führt vorteilhafterweise zu einem geringen Gewicht der Bodenplatte. Trotz einer geringen Rohdichte kann insbesondere aufgrund der Verwendung einer Holzart mit guten mechanischen Eigenschaften, einer entsprechenden Dicke der Mittellage und aufgrund der verstärkenden Deckschicht insgesamt eine hohe mechanische Belastbarkeit der Bodenplatte erreicht werden.

Gemäß einer weiteren Ausführungsform weist das Massivholz ein Volumenschwindmaß von 16,4 % oder weniger, insbesondere 14,3 % oder weniger, bevorzugt 13,0 % oder weniger, weiter bevorzugt 12,8 % oder weniger, noch weiter bevorzugt 12,4 % oder weniger, noch weiter bevorzugt 12,0 % oder weniger, am meisten bevorzugt 8,5 % oder weniger, auf.

Gemäß einer weiteren Ausführungsform weist das Massivholz ein Volumenschwindmaß von 4,8 % bis 16,4 %, insbesondere 4,8 % bis 14,3 %, bevorzugt 4,8 % bis 13,0 %, weiter bevorzugt 4,8 % bis 12,8 %, noch weiter bevorzugt 4,8 % bis 12,4 %, noch weiter bevorzugt 4,8 % bis 12,0 %, am meisten bevorzugt 4,8 % bis 8,5 %, auf.

Gemäß einer weiteren Ausführungsform weist das Massivholz ein Volumenschwindmaß von 11,0 % bis 12,8 % auf.

Gemäß einer weiteren Ausführungsform weist das Massivholz ein Volumenschwindmaß von 11,6 % bis 12,0 % auf.

Gemäß einer weiteren Ausführungsform weist das Massivholz ein Volumenschwindmaß von 11,4 % bis 16,4 % auf.

Gemäß einer weiteren Ausführungsform weist das Massivholz ein Volumenschwindmaß von 11,2 % bis 12,4 % auf.

Gemäß einer weiteren Ausführungsform weist das Massivholz ein Volumenschwindmaß von 5,7 % bis 8,5 % auf.

Gemäß einer weiteren Ausführungsform weist das Massivholz ein Volumenschwindmaß von 4,8 % oder mehr auf.

Gemäß einer weiteren Ausführungsform weist das Massivholz ein Volumenschwindmaß von 10,7 % bis 14,3 % auf.

Gemäß einer weiteren Ausführungsform weist das Massivholz ein Volumenschwindmaß von 12,0 % bis 13,0 % auf.

Ein geringes Volumenschwindmaß des Massivholzes hat insbesondere eine höhere Beständigkeit der Bodenplatte zur Folge.

Gemäß einer weiteren Ausführungsform weist das Massivholz eine Biegefestigkeit von 41 N/mm² oder mehr, insbesondere 55 N/mm² oder mehr, auf.

Gemäß einer weiteren Ausführungsform weist das Massivholz eine Biegefestigkeit von 41 N/mm² oder mehr, insbesondere 43 N/mm² oder mehr, bevorzugt 49 N/mm² oder mehr, weiter bevorzugt 52 N/mm² oder mehr, noch weiter bevorzugt 57 N/mm² oder mehr, noch weiter bevorzugt 60 N/mm² oder mehr, am meisten bevorzugt 66 N/mm² oder mehr, auf.

Gemäß einer weiteren Ausführungsform weist das Massivholz eine Biegefestigkeit von 41 N/mm² oder mehr, 45 N/mm² oder mehr, 50 N/mm² oder mehr, 55 N/mm² oder mehr, 60 N/mm² oder mehr, 65 N/mm² oder mehr oder 66 N/mm² oder mehr auf.

Gemäß einer weiteren Ausführungsform weist das Massivholz eine Biegefestigkeit von 41 N/mm² bis 205 N/mm², insbesondere 43 N/mm² bis 205 N/mm², bevorzugt 49 N/mm² bis 205 N/mm², weiter bevorzugt 52 N/mm² bis 205 N/mm², noch weiter bevorzugt 57 N/mm² bis 205 N/mm², noch weiter bevorzugt 60 N/mm² bis 205 N/mm², am meisten bevorzugt 66 N/mm² bis 205 N/mm², auf.

Gemäß einer weiteren Ausführungsform weist das Massivholz eine Biegefestigkeit von 52 N/mm² bis 60 N/mm² auf.

Gemäß einer weiteren Ausführungsform weist das Massivholz eine Biegefestigkeit von 49 N/mm² bis 136 N/mm² auf.

Gemäß einer weiteren Ausführungsform weist das Massivholz eine Biegefestigkeit von 60 N/mm² bis 125 N/mm² auf.

Gemäß einer weiteren Ausführungsform weist das Massivholz eine Biegefestigkeit von 41 N/mm² bis 205 N/mm² auf.

Gemäß einer weiteren Ausführungsform weist das Massivholz eine Biegefestigkeit von 60 N/mm² bis 91 N/mm² auf.

Gemäß einer weiteren Ausführungsform weist das Massivholz eine Biegefestigkeit von 66 N/mm² bis 117 N/mm² auf.

Gemäß einer weiteren Ausführungsform weist das Massivholz eine Biegefestigkeit von 43 N/mm² bis 94 N/mm² auf.

Gemäß einer weiteren Ausführungsform weist das Massivholz eine Biegefestigkeit von 57 N/mm² bis 70 N/mm² auf.

Eine hohe Biegefestigkeit des Massivholzes bewirkt eine hohe mechanische Belastbarkeit und hohe Lasttragekapazität der Bodenplatte.

Gemäß einer weiteren Ausführungsform weist das Massivholz eine Zugfestigkeit von 21 N/mm² oder mehr, insbesondere 70 N/mm² oder mehr, auf.

Gemäß einer weiteren Ausführungsform weist das Massivholz eine Zugfestigkeit von 21 N/mm² oder mehr, insbesondere 35 N/mm² oder mehr, bevorzugt 43 N/mm² oder mehr, weiter bevorzugt 72 N/mm² oder mehr, noch weiter bevorzugt 76 N/mm² oder mehr, noch weiter bevorzugt 83 N/mm² oder mehr, am meisten bevorzugt 85 N/mm² oder mehr, auf.

Gemäß einer weiteren Ausführungsform weist das Massivholz eine Zugfestigkeit von 21 N/mm² oder mehr, 25 N/mm² oder mehr, 30 N/mm² oder mehr, 35 N/mm² oder mehr, 40 N/mm² oder mehr, 45 N/mm² oder mehr, 50 N/mm² oder mehr, 55 N/mm² oder mehr, 60 N/mm² oder mehr, 65 N/mm² oder mehr oder 70 N/mm² oder mehr auf.

Gemäß einer weiteren Ausführungsform weist das Massivholz eine Zugfestigkeit von 21 N/mm² bis 245 N/mm², insbesondere 35 N/mm² bis 245 N/mm², bevorzugt 43 N/mm² bis 245 N/mm², weiter bevorzugt 72 N/mm² bis 245 N/mm², noch weiter bevorzugt 76 N/mm² bis 245 N/mm², noch weiter bevorzugt 83 N/mm² bis 245 N/mm², am meisten bevorzugt 85 N/mm² bis 245 N/mm², auf.

Gemäß einer weiteren Ausführungsform weist das Massivholz eine mittlere Zugfestigkeit von 75 N/mm² auf.

Gemäß einer weiteren Ausführungsform weist das Massivholz eine Zugfestigkeit von 21 N/mm² bis 245 N/mm² auf.

Gemäß einer weiteren Ausführungsform weist das Massivholz eine Zugfestigkeit von 85 N/mm² bis 197 N/mm² auf.

Gemäß einer weiteren Ausführungsform weist das Massivholz eine Zugfestigkeit von 35 N/mm² bis 196 N/mm² auf.

Gemäß einer weiteren Ausführungsform weist das Massivholz eine Zugfestigkeit von 72 N/mm² bis 86 N/mm² auf.

Gemäß einer weiteren Ausführungsform weist das Massivholz eine Zugfestigkeit von 76 N/mm² bis 102 N/mm² auf.

Gemäß einer weiteren Ausführungsform weist das Massivholz eine Zugfestigkeit von 43 N/mm² bis 110 N/mm² auf.

Gemäß einer weiteren Ausführungsform weist das Massivholz eine Zugfestigkeit von 83 N/mm² oder mehr auf.

Eine hohe Biegefestigkeit des Massivholzes bewirkt eine hohe mechanische Belastbarkeit und hohe Lasttragekapazität der Bodenplatte.

Gemäß einer weiteren Ausführungsform weist das Massivholz einen Elastizitätsmodul von 4000 N/mm² oder mehr, insbesondere 6500 N/mm² oder mehr, auf.

Gemäß einer weiteren Ausführungsform weist das Massivholz einen Elastizitätsmodul von 4000 N/mm² oder mehr, insbesondere 6900 N/mm² oder mehr, bevorzugt 7200 N/mm² oder mehr, weiter bevorzugt 7300 N/mm² oder mehr, noch weiter bevorzugt 7500 N/mm² oder mehr, am meisten bevorzugt 8500 N/mm² oder mehr, auf.

Gemäß einer weiteren Ausführungsform weist das Massivholz einen Elastizitätsmodul von 4000 N/mm² oder mehr, 4500 N/mm² oder mehr, 5000 N/mm² oder mehr, 5500 N/mm² oder mehr, 6000 N/mm² oder mehr, 6500 N/mm² oder mehr, 7000 N/mm² oder mehr, 7500 N/mm² oder mehr, 8000 N/mm² oder mehr oder 8500 N/mm² oder mehr auf.

Gemäß einer weiteren Ausführungsform weist das Massivholz einen Elastizitätsmodul von 4000 N/mm² bis 21400 N/mm², insbesondere 6900 N/mm² bis 21400 N/mm², bevorzugt 7200 N/mm² bis 21400 N/mm², weiter bevorzugt 7300 N/mm² bis 21400 N/mm², noch weiter bevorzugt 7500 N/mm² bis 21400 N/mm², am meisten bevorzugt 8500 N/mm² bis 21400 N/mm², auf.

Gemäß einer weiteren Ausführungsform weist das Massivholz einen Elastizitätsmodul von 7500 N/mm² bis 7800 N/mm² auf.

Gemäß einer weiteren Ausführungsform weist das Massivholz einen Elastizitätsmodul von 7300 N/mm² bis 21400 N/mm² auf.

Gemäß einer weiteren Ausführungsform weist das Massivholz einen Elastizitätsmodul von 7200 N/mm² bis 15500 N/mm² auf.

Gemäß einer weiteren Ausführungsform weist das Massivholz einen Elastizitätsmodul von 6900 N/mm² bis 20100 N/mm² auf.

Gemäß einer weiteren Ausführungsform weist das Massivholz einen Elastizitätsmodul von 8500 N/mm² bis 13600 N/mm² auf.

Gemäß einer weiteren Ausführungsform weist das Massivholz einen mittleren Elastizitätsmodul von 9200 N/mm² auf.

Gemäß einer weiteren Ausführungsform weist das Massivholz einen Elastizitätsmodul von 4000 N/mm² bis 11700 N/mm² auf.

Gemäß einer weiteren Ausführungsform weist das Massivholz einen mittleren Elastizitätsmodul von 11500 N/mm² auf.

Ein hoher Elastizitätsmodul des Massivholzes bewirkt eine hohe mechanische Belastbarkeit und hohe Lasttragekapazität der Bodenplatte.

Gemäß einer weiteren Ausführungsform ist die wenigstens eine Massivholzschicht aus Massivholz der *Populus tremula,* auch als Aspe, Espe oder Zitterpappel bezeichnet, *Picea abies,* auch als Gemeine Fichte bezeichnet, *Agathis australis,* auch als Kauri-Baum bezeichnet, *Pinus sylvestris* , auch als Gemeine Kiefer bezeichnet, *Pinus radiata,* auch als Monterey-Kiefer bezeichnet, *Hevea brasiliensis,* auch als Kautschukbaum oder Rubberwood bezeichnet, *Populus nigra,* auch als Schwarzpappel bezeichnet, oder *Liriodendron tulipifera,* auch als Tulpenbaum oder Yellow Poplar bezeichnet, insbesondere *Pinus sylvestris, Hevea brasiliensis, Liriodendron tulipifera, Agathis australis* oder *Pinus radiata,* bevorzugt *Pinus sylvestris, Hevea brasiliensis* oder *Liriodendron tulipifera,* gebildet.

Gemäß einer weiteren Ausführungsform ist die wenigstens eine Massivholzschicht aus Massivholz der *Picea abies, Agathis australis, Pinus sylvestris, Pinus radiata, Hevea brasiliensis, Populus nigra* oder *Liriodendron tulipifera* gebildet.

Gemäß einer weiteren Ausführungsform ist die wenigstens eine Massivholzschicht aus Massivholz der *Populus tremula, Agathis australis, Pinus sylvestris, Pinus radiata, Hevea brasiliensis, Populus nigra* oder *Liriodendron tulipifera* gebildet.

Gemäß einer weiteren Ausführungsform ist die wenigstens eine Massivholzschicht aus Massivholz der *Populus tremula, Picea abies, Pinus sylvestris, Pinus radiata, Hevea brasiliensis, Populus nigra* oder *Liriodendron tulipifera* gebildet.

Gemäß einer weiteren Ausführungsform ist die wenigstens eine Massivholzschicht aus Massivholz der *Populus tremula, Picea abies, Agathis australis, Pinus radiata, Hevea brasiliensis, Populus nigra* oder *Liriodendron tulipifera* gebildet.

Gemäß einer weiteren Ausführungsform ist die wenigstens eine Massivholzschicht aus Massivholz der *Populus tremula, Picea abies, Agathis australis, Pinus sylvestris, Hevea brasiliensis, Populus nigra* oder *Liriodendron tulipifera* gebildet.

Gemäß einer weiteren Ausführungsform ist die wenigstens eine Massivholzschicht aus Massivholz der *Populus tremula, Picea abies, Agathis australis, Pinus sylvestris, Pinus radiata, Populus nigra* oder *Liriodendron tulipifera* gebildet.

Gemäß einer weiteren Ausführungsform ist die wenigstens eine Massivholzschicht aus Massivholz der *Populus tremula, Picea abies, Agathis australis, Pinus sylvestris, Pinus radiata, Hevea brasiliensis* oder *Liriodendron tulipifera* gebildet.

Gemäß einer weiteren Ausführungsform ist die wenigstens eine Massivholzschicht aus Massivholz der *Populus tremula, Picea abies, Agathis australis, Pinus sylvestris, Pinus radiata, Hevea brasiliensis* oder *Populus nigra* gebildet.

Gemäß einer weiteren Ausführungsform ist die wenigstens eine Massivholzschicht aus Massivholz der *Pinus sylvestris, Hevea brasiliensis, Liriodendron tulipifera, Agathis australis* oder *Pinus radiata* gebildet.

Gemäß einer weiteren Ausführungsform ist die wenigstens eine Massivholzschicht aus Massivholz der *Pinus sylvestris, Hevea brasiliensis* oder *Liriodendron tulipifera* gebildet.

Gemäß einer weiteren Ausführungsform ist die wenigstens eine Massivholzschicht aus Massivholz der *Agathis australis, Hevea brasiliensis* oder *Liriodendron tulipifera* gebildet.

Gemäß einer weiteren Ausführungsform ist die wenigstens eine Massivholzschicht aus Massivholz der *Hevea brasiliensis* oder *Liriodendron tulipifera* gebildet.

Gemäß einer weiteren Ausführungsform ist die wenigstens eine Massivholzschicht aus Massivholz der *Populus tremula* (Aspe, Espe oder Zitterpappel) gebildet. Das Holz dieses Baums weist eine minimale Rohdichte (12 %- 15% u, lufttrocken) von ca. 400 kg/m³, eine mittlere Rohdichte (12 %- 15% u, lufttrocken) von ca. 490 kg/m³, eine maximale Rohdichte (12 %- 15% u, lufttrocken) von ca. 600 kg/m³, ein minimales Volumenschwindmaß von ca. 11,0 %, ein maximales Volumenschwindmaß von ca. 12,8 %, eine minimale Biegefestigkeit von ca. 52 N/mm², eine maximale Biegefestigkeit von ca. 60 N/mm², eine mittlere Zugfestigkeit von ca. 75 N/mm², einen minimalen Elastizitätsmodul von ca. 7500 N/mm² und einen maximalen Elastizitätsmodul von ca. 7800 N/mm² auf. Dieses Holz weist vorteilhafterweise eine besonders geringe Rohdichte bei relativ hoher Biegefestigkeit und Zugfestigkeit auf.

Gemäß einer weiteren Ausführungsform ist die wenigstens eine Massivholzschicht aus Massivholz der *Picea abies* (Gemeine Fichte) gebildet. Das Holz dieses Baums weist eine minimale Rohdichte (12 %- 15% u, lufttrocken) von ca. 330 kg/m³, eine mittlere Rohdichte (12 %- 15% u, lufttrocken) von ca. 470 kg/m³, eine maximale Rohdichte (12 %- 15% u, lufttrocken) von ca. 680 kg/m³, ein minimales Volumenschwindmaß von ca. 11,6 %, ein maximales Volumenschwindmaß von ca. 12,0 %, eine minimale Biegefestigkeit von ca. 49 N/mm², eine mittlere Biegefestigkeit von ca. 78 N/mm², eine maximale Biegefestigkeit von ca. 136 N/mm², eine minimale Zugfestigkeit von ca. 21 N/mm²,eine mittlere Zugfestigkeit von ca. 90 N/mm², eine maximale Zugfestigkeit von ca. 245 N/mm², einen minimalen Elastizitätsmodul von ca. 7300 N/mm², einen mittleren Elastizitätsmodul von ca. 11000 N/mm² und einen maximalen Elastizitätsmodul von ca. 21400 N/mm² auf. Dieses Holz weist vorteilhafterweise eine besonders geringe Rohdichte bei hoher Zugfestigkeit und hohem Elastizitätsmodul auf.

Gemäß einer weiteren Ausführungsform ist die wenigstens eine Massivholzschicht aus Massivholz der *Agathis australis* (Kauri-Baum) gebildet. Das Holz dieses Baums weist eine minimale Rohdichte (12 %- 15% u, lufttrocken) von ca. 400 kg/m³, eine mittlere Rohdichte (12 %- 15% u, lufttrocken) von ca. 500 kg/m³, eine maximale Rohdichte (12 %- 15% u, lufttrocken) von ca. 670 kg/m³, ein minimales Volumenschwindmaß von ca. 11,4 %, ein maximales Volumenschwindmaß von ca. 16,4 %, eine minimale Biegefestigkeit von ca. 60 N/mm², eine mittlere Biegefestigkeit von ca. 101 N/mm², eine maximale Biegefestigkeit von ca. 125 N/mm², eine minimale Zugfestigkeit von ca. 85 N/mm²,eine mittlere Zugfestigkeit von ca. 135 N/mm², eine maximale Zugfestigkeit von ca. 197 N/mm², einen minimalen Elastizitätsmodul von ca. 7200 N/mm², einen mittleren Elastizitätsmodul von ca. 11900 N/mm² und einen maximalen Elastizitätsmodul von ca. 15500 N/mm² auf. Dieses Holz weist vorteilhafterweise eine besonders geringe Rohdichte bei besonders hoher Zugfestigkeit auf.

Gemäß einer weiteren Ausführungsform ist die wenigstens eine Massivholzschicht aus Massivholz der *Pinus sylvestris* (Gemeine Kiefer) gebildet. Das Holz dieses Baums weist eine minimale Rohdichte (12 %- 15% u, lufttrocken) von ca. 330 kg/m³, eine mittlere Rohdichte (12 %- 15% u, lufttrocken) von ca. 510 kg/m³, eine maximale Rohdichte (12 %-15% u, lufttrocken) von ca. 890 kg/m³, ein minimales Volumenschwindmaß von ca. 11,2 %, ein maximales Volumenschwindmaß von ca. 12,4 %, eine minimale Biegefestigkeit von ca. 41 N/mm², eine mittlere Biegefestigkeit von ca. 80 N/mm², eine maximale Biegefestigkeit von ca. 205 N/mm², eine minimale Zugfestigkeit von ca. 35 N/mm²,eine mittlere Zugfestigkeit von ca. 104 N/mm², eine maximale Zugfestigkeit von ca. 196 N/mm², einen minimalen Elastizitätsmodul von ca. 6900 N/mm², einen mittleren Elastizitätsmodul von ca. 12000 N/mm² und einen maximalen Elastizitätsmodul von ca. 20100 N/mm² auf. Dieses Holz weist vorteilhafterweise eine besonders geringe Rohdichte bei besonders hoher Biegefestigkeit und besonders hohem Elastizitätsmodul auf.

Gemäß einer weiteren Ausführungsform ist die wenigstens eine Massivholzschicht aus Massivholz der *Pinus radiata* (Monterey-Kiefer) gebildet. Das Holz dieses Baums weist eine minimale Rohdichte (12 %- 15% u, lufttrocken) von ca. 450 kg/m³, eine maximale Rohdichte (12 %- 15% u, lufttrocken) von ca. 580 kg/m³, ein minimales Volumenschwindmaß von ca. 5,7 %, ein maximales Volumenschwindmaß von ca. 8,5 %, eine minimale Biegefestigkeit von ca. 60 N/mm², eine maximale Biegefestigkeit von ca. 91 N/mm², eine minimale Zugfestigkeit von ca. 72 N/mm², eine maximale Zugfestigkeit von ca. 86 N/mm², einen minimalen Elastizitätsmodul von ca. 8500 N/mm² und einen maximalen Elastizitätsmodul von ca. 13600 N/mm² auf. Dieses Holz weist vorteilhafterweise eine relativ geringe Rohdichte bei besonders geringem Volumenschwindmaß und besonders hohem Elastizitätsmodul auf.

Gemäß einer weiteren Ausführungsform ist die wenigstens eine Massivholzschicht aus Massivholz der *Hevea brasiliensis* (Kautschukbaum bzw. Rubberwood) gebildet. Das Holz dieses Baums weist eine minimale Rohdichte (12 %- 15% u, lufttrocken) von ca. 560 kg/m³, eine mittlere Rohdichte (12 %- 15% u, lufttrocken) von ca. 620 kg/m³, eine maximale Rohdichte (12 %- 15% u, lufttrocken) von ca. 730 kg/m³, ein minimales Volumenschwindmaß von ca. 4,8 %, eine minimale Biegefestigkeit von ca. 66 N/mm², eine mittlere Biegefestigkeit von ca. 95 N/mm², eine maximale Biegefestigkeit von ca. 117 N/mm², eine minimale Zugfestigkeit von ca. 76 N/mm²,eine mittlere Zugfestigkeit von ca. 85 N/mm², eine maximale Zugfestigkeit von ca. 102 N/mm² und einen mittleren Elastizitätsmodul von ca. 9200 N/mm² auf. Dieses Holz weist vorteilhafterweise eine relativ geringe Rohdichte bei besonders geringem Volumenschwindmaß und besonders hoher Biegefestigkeit auf.

Gemäß einer weiteren Ausführungsform ist die wenigstens eine Massivholzschicht aus Massivholz der *Populus nigra* (Schwarzpappel) gebildet. Das Holz dieses Baums weist eine minimale Rohdichte (12 %- 15% u, lufttrocken) von ca. 410 kg/m³, eine mittlere Rohdichte (12 %- 15% u, lufttrocken) von ca. 450 kg/m³, eine maximale Rohdichte (12 %- 15% u, lufttrocken) von ca. 560 kg/m³, ein minimales Volumenschwindmaß von ca. 10,7 %, ein maximales Volumenschwindmaß von ca. 14,3 %, eine minimale Biegefestigkeit von ca. 43 N/mm², eine mittlere Biegefestigkeit von ca. 60 N/mm², eine maximale Biegefestigkeit von ca. 94 N/mm², eine minimale Zugfestigkeit von ca. 43 N/mm²,eine mittlere Zugfestigkeit von ca. 77 N/mm², eine maximale Zugfestigkeit von ca. 110 N/mm², einen minimalen Elastizitätsmodul von ca. 4000 N/mm², einen mittleren Elastizitätsmodul von ca. 8800 N/mm² und einen maximalen Elastizitätsmodul von ca. 11700 N/mm² auf. Dieses Holz weist vorteilhafterweise eine besonders geringe Rohdichte bei relativ hoher Zugfestigkeit auf.

Gemäß einer weiteren Ausführungsform ist die wenigstens eine Massivholzschicht aus Massivholz der *Liriodendron tulipifera* (Tulpenbaum bzw. Yellow Poplar) gebildet. Das Holz dieses Baums weist eine minimale Rohdichte (12 %- 15% u, lufttrocken) von ca. 450 kg/m³, eine maximale Rohdichte (12 %- 15% u, lufttrocken) von ca. 550 kg/m³, ein minimales Volumenschwindmaß von ca. 12,0 %, ein maximales Volumenschwindmaß von ca. 13,0 %, eine minimale Biegefestigkeit von ca. 57 N/mm², eine maximale Biegefestigkeit von ca. 70 N/mm², eine minimale Zugfestigkeit von ca. 83 N/mm² und einen mittleren Elastizitätsmodul von ca. 11500 N/mm² auf. Dieses Holz weist vorteilhafterweise eine besonders geringe, insbesondere mittlere, Rohdichte bei guten mechanischen Werten, insbesondere einer besonders hohen Zugfestigkeit auf. Zudem ist Yellow-Poplar-Holz leicht und homogen und in ausreichenden Mengen als Schnittholz verfügbar.

Gemäß einer weiteren Ausführungsform ist die wenigstens eine Massivholzschicht aus einem zerstreutporigen Laubholz gebildet.

Dies hat den Vorteil einer besonders homogenen Struktur des Massivholzes.

Gemäß einer weiteren Ausführungsform weist die Bodenplatte eine Dicke von 27 mm bis 65 mm, insbesondere 35 mm bis 65 mm, auf.

Gemäß einer weiteren Ausführungsform weist die Bodenplatte eine Dicke von 21 mm bis 65 mm, insbesondere 27 mm bis 65 mm, bevorzugt 35 mm bis 65 mm, auf.

Gemäß einer weiteren Ausführungsform weist die Bodenplatte eine Dicke von 21 mm, 22 mm, 23 mm, 24 mm, 25 mm, 26 mm, 27 mm, 28 mm, 29 mm, 30 mm, 31 mm, 32 mm, 33 mm, 34 mm, 35 mm, 36 mm, 37 mm, 38 mm, 39 mm, 40 mm, 41 mm, 42 mm, 43 mm, 44 mm, 45 mm, 46 mm, 47 mm, 48 mm, 49 mm, 50 mm, 51 mm, 52 mm, 53 mm, 54 mm, 55 mm, 56 mm, 57 mm, 58 mm, 59 mm, 60 mm, 61 mm, 62 mm, 63 mm, 64 mm oder 65 mm auf

Dabei wird die Dicke senkrecht zu den Flächen der Bodenplatte gemessen.

Dicken von 27 mm und 35 mm sind übliche Maße für Laderaumböden nach dem Stand der Technik.

Gemäß einer weiteren Ausführungsform weist die Deckschicht eine Dicke von 0,5 mm bis 2,0 mm auf.

Gemäß einer weiteren Ausführungsform weist die Deckschicht eine Dicke von 0,5 mm, 0,6 mm, 0,7 mm, 0,8 mm, 0,9 mm, 1,0 mm, 1,1 mm, 1,2 mm, 1,3 mm, 1,4 mm, 1,5 mm, 1,6 mm, 1,7 mm, 1,8 mm, 1,9 mm oder 2,0 mm auf.

Dabei wird die Dicke senkrecht zu den Flächen der Bodenplatte gemessen.

Gemäß einer weiteren Ausführungsform ist die Deckschicht durch ein High Pressure Laminate (HPL) oder ein Continuous Pressure Laminate (CPL) gebildet.

HPL wird insbesondere aus mehreren Lagen mit Melamin-Harz und/oder Phenol-Harz getränkter Papiere hergestellt. Dafür werden die Papiere unter Einwirkung von Druck und Wärme verpresst und die Harze härten dabei vollständig aus.

CPL unterscheidet sich von den HPL nicht im Aufbau sondern in der Herstellung. Dabei wird HPL in Zuschnittgrößen in Taktpressen und CPL als Endlosfilm aus Rollenwaren im Durchlaufprozess hergestellt.

HPL und CPL-Laminate besitzen eine sehr hohe Dichte, Oberflächenhärte, Abriebfestigkeit und Dauerhaftigkeit und werden z.B. als Dekore im Küchen- und Badbereich, wie auch im Außenbereich eingesetzt. Sie werden z.B. als Beschichtung auf eine Trägerplatte aufgeklebt oder als massive Platte eingesetzt. Als Trägerplatte dienen nach dem Stand der Technik meist Holzwerkstoffe wie Span- oder MDF-Platten, aber auch Sperrhölzer oder Stäbchenplatten.

Gemäß einer weiteren Ausführungsform weist die Mittellage eine Mehrzahl an miteinander, z.B. durch Leimen, verbundener Massivholzschichten aus Massivholz auf.

Gemäß einer weiteren Ausführungsform weist die Mittellage drei bis fünf, insbesondere drei, miteinander verbundene Massivholzschichten aus Massivholz auf, wobei insbesondere die Faserrichtungen aneinander angrenzenden Massivholzschichten um 90° gedreht (senkrecht) zueinander angeordnet sind.

Dabei handelt es sich bei der Mittellage insbesondere um eine sogenannte Dreischichtplatte (auch als 3S-Platte oder Cross Laminated Timber, CLT, bezeichnet).

Dreischichtplatten aus Nadelhölzern werden z.B. als Schalungsplatten im Hausbau eingesetzt, aber auch für Innenausstattungen oder im Möbelbau. Seit den 90er Jahren werden in Mitteleuropa stärke Plattentypen aus dickeren Lamellen unter dem Oberbegriff CLT hergestellt und im Hausbau verwendet.

Gemäß einer weiteren Ausführungsform weist die Bodenplatte eine Rohrsegmentschicht auf, die wenigstens ein Rohrsegment aufweist, das in Umfangsrichtung des jeweiligen Rohrsegments durch zwei Schnittenden begrenzt ist, wobei das wenigstens eine Rohrsegment entlang seiner Längserstreckungsrichtung durch zwei Schnittflächen begrenzt ist, wobei die Schnittflächen mit der wenigstens einen Massivholzschicht der Mittellage der Bodenplatte verbunden sind.

Im Zusammenhang der vorliegenden Erfindung ist mit dem Begriff Rohrsegment ein Teil eines wirklichen oder gedachten Rohres mit der ersten Längserstreckungsrichtung gemeint. Der Querschnitt des Rohres senkrecht zu der ersten Längserstreckungsrichtung weist einen Umfang, also eine gedachte Linie, welche den Querschnitt an seiner Außenseite begrenzt, auf. Dabei muss der Querschnitt nicht kreisförmig oder elliptisch sein, sondern kann insbesondere auch eckig, z.B. trapezsegmentförmig, ausgeformt sein. Die Umfangsrichtung des Rohres verläuft (auch im Fall eines Rohres mit einem eckigen Querschnitt) entlang eines gedachten Kreises, welcher den Querschnitt des Rohres senkrecht zur Längserstreckungsrichtung umgibt.

Die Rohrsegmente weisen jeweils eine Wandung auf, die in Umfangsrichtung durch die Schnittenden begrenzt ist, wobei die Wandung in Umfangsrichtung geöffnet ist. Die Wandung ist dabei in Längserstreckungsrichtung durchgehend geöffnet. Dabei ist mit der Umfangsrichtung des Rohrsegments die Umfangsrichtung des zugehörigen wirklichen oder gedachten Rohres gemeint, welches eine geschlossene Wandung aufweist. Das Rohrsegment kann insbesondere durch Schneiden des Rohres gebildet sein, kann aber auch auf andere Weise, insbesondere durch das mechanische Verbinden mehrerer Leisten, gebildet sein.

Die Schnittenden des Rohrsegments begrenzen das Rohrsegment in Umfangsrichtung. Die Wandung des Rohrsegments wird also in Umfangsrichtung durch die Schnittenden begrenzt. Der Querschnitt des Rohrsegments ist also durch ein offenes Profil gebildet.

Die Rohrsegmente weisen weiterhin jeweils zwei Schnittflächen auf, die die Rohrsegmente in Längserstreckungsrichtung begrenzen. Die Schnittflächen verlaufen insbesondere senkrecht zu der Längserstreckungsrichtung.

Eine solche Rohrsegmentschicht sorgt bei äußerst geringem Gewicht für eine Verstärkung, also Erhöhung der mechanischen Belastbarkeit und Lasttragekapazität in Richtung der Dicke der Bodenplatte.

Gemäß einer weiteren Ausführungsform ist das wenigstens eine Rohrsegment aus einem Holzwerkstoff, insbesondere HDF (High Density Fiberboard) gebildet.

Gemäß einer weiteren Ausführungsform ist das wenigstens eine Rohrsegment aus Massivholz gebildet.

Der Begriff Holzwerkstoff bezeichnet im Zusammenhang der vorliegenden Erfindung einen Werkstoff, welcher zerkleinertes Holz, insbesondere Holzspäne, Hackschnitzel, Holzfurniere, Holzfurnierstreifen, Holzwolle, Holzfasern oder Holzstäube, oder andere Lignocellulosematerialien aufweist. Weiterhin kann der Holzwerkstoff insbesondere Bindemittel, Klebstoffe und/ oder Additiva aufweisen. Additiva können insbesondere Hydrophobisierungsmittel, Holzschutzmittel, Flammschutzmittel, Härter oder Farbpartikel sein. Zu den Bindemitteln gehören insbesondere Harnstoffleim, Kunstharze, z.B. Phenolharze, Isocyanate, Kunststoffe und/ oder Biokunststoffe. Holzfurniere und/ oder Holzfurnierstreifen dienen dabei insbesondere zur Herstellung von Sperrholz und/ oder Grobspanplatten (OSB-Platten).

Zu den Holzwerkstoffen gehören insbesondere Vollholzwerkstoffe, z.B. Massivholzplatten (gemäß DIN EN 12775) oder Leimholzplatten, Brettsperrholz, Brettschichtholz, Stabsperrholz, und/ oder lamelliertes Holz, Furnierholzwerkstoffe, z.B. Furniersperrholz (FU), Furnierschichtholz, Furnierstreifenholz, Biegesperrholz, Holzspanwerkstoffe, z.B. Flachpressplatten (P2), Strangpressplatten, Spanholzformteile, Grobspanplatten (OSB-Platten, gemäß DIN EN 300) und/ oder Spanstreifenholz (LSL), Holzfaserwerkstoffe, z.B. Holzfaserdämmplatten (HFD), poröse Faserplatten, Soft Boards (SB), mittelharte Faserplatten (MB), harte Faserplatten (HB oder HFH), Hartfaserplatten, extraharte Faserplatten (HFE), mitteldichte Faserplatten (MDF), hochdichte Faserplatten (*high density fiberboards*, HDF) und/ oder ultraleichte Faserplatten (ULDF), Arboform oder Flüssigholz.

Dabei bezeichnet der Begriff Faserplatten die in DIN EN 622 spezifizierten Holzwerkstoffe. Der Begriff Spanplatten bezeichnet die in den Normen DIN EN 309 und DIN EN 312 spezifizierten Holzwerkstoffe. Der Begriff Sperrholz bezeichnet die in den Normen DIN 68708 und DIN EN 313 spezifizierten Holzwerkstoffe.

Holzwerkstoffe haben den Vorteil einer großen Materialfestigkeit und mechanischer Belastbarkeit bei gleichzeitiger Leichtigkeit.

Gemäß einer Ausführungsform weist der Holzwerkstoff einen Ligningehalt von >5%, insbesondere >10% Gewichtsanteil auf. Das bedeutet, dass insbesondere Papier und Pappe keine Holzwerkstoffe im Sinne der vorliegenden Erfindung darstellen, da bei der Papierherstellung z.B. durch chemische Bleichmittel das Lignin der verwendeten Holzrohstoffe weitgehend entfernt wird.

Gemäß einer weiteren Ausführungsform ist der Holzwerkstoff frei von chemischen Bleichmitteln.

Gemäß einer weiteren Ausführungsform ist der Holzwerkstoff in einem Trockenverfahren bei einer Holzfeuchte von < 20 % hergestellt. Dabei bezieht sich die prozentuale Angabe auf das Verhältnis des Wassergewichtes zu der absolut trockenen Holzmasse. Bei einem Trockenverfahren werden die Holzpartikel vor der Fliesbildung und dem Pressen zum Produkt getrocknet und das Produkt weist eine Holzfeuchte von unter 20% auf. Der Leimauftrag kann vor oder nach dem Trocknen erfolgen.

Gemäß einer weiteren Ausführungsform weist der Holzwerkstoff unter Druck und/ oder Hitze verpresste Holzfasern auf. Gemäß einer weiteren Ausführungsform weist der Holzwerkstoff eine Dichte von > 800 kg/m³ auf. Hochdichte Faserplatten weisen beispielsweise eine Dichte in dem genannten Bereich auf.

Gemäß einer weiteren Ausführungsform ist der Holzwerkstoff das Material einer hochdichten Faserplatte (HDF).

Gemäß einer weiteren Ausführungsform sind die Rohrsegmente aus einer Mehrzahl von Leisten gebildet. Dabei verlaufen die Leisten in Längserstreckungsrichtung des Rohrsegments. Bei dieser Ausführungsform wird insbesondere ein Rohrsegment mit einem eckigen Querschnitt gebildet.

Gemäß einer weiteren Ausführungsform weisen die Rohrsegmente jeweils zwei Seitenelemente und ein Dachelement auf, wobei die Rohrsegmente Gehrungen aufweisen, an denen die Seitenelemente mit dem Dachelement mechanisch verbunden sind.

Gemäß einer weiteren Ausführungsform sind die Rohrsegmente jeweils aus zwei Seitenelementen und einem Dachelement gebildet.

Solche Rohrsegmente aus lediglich drei Komponenten sind einfach zu konstruieren, bewirken aber trotzdem eine hohe mechanische Stabilität der Rohrsegmentschicht bei geringem Gewicht. Die Seitenelemente und das Dachelement lassen sich auf einfache Weise aus einer Platte oder einem Brett durch Einbringen von Gehrungen, Falten an den Gehrungen und mechanisches Verbinden (z.B. Leimen) herstellen. Durch entsprechende Ausführung der Gehrungen lassen sich insbesondere die Winkel zwischen den Seitenelementen und dem Dachelement beliebig einstellen.

Gemäß einer weiteren Ausführungsform sind die Seitenelemente und das Dachelement jeweils aus einer Leiste, insbesondere aus einem Holzwerkstoff, gebildet.

Gemäß einer weiteren Ausführungsform weisen die Rohrsegmente in Bezug auf die Längserstreckungsrichtung der Rohrsegmente (insbesondere quer zur Ebene der ersten und zweiten Platte) einen trapezsegmentförmigen Querschnitt auf.

Gemäß einer weiteren Ausführungsform weist die Rohrsegmentschicht wenigstens eine Stegbasis auf, wobei die Schnittenden des wenigstens einen Rohrsegments mit der Stegbasis verbunden sind.

Die Stegbasis bewirkt eine weitere Erhöhung der mechanischen Stabilität und Belastbarkeit der Rohrsegmentschicht. Dies führt zu einer Erhöhung der Lasttragekapazität in Richtung der Dicke der Bodenplatte.

Gemäß einer weiteren Ausführungsform ist die Bodenplatte dazu ausgebildet, eine Last bis zum Bruch der Bodenplatte von 4,5 t oder mehr, insbesondere 5 t oder mehr, bevorzugt 5,5 t oder mehr, zu tragen.

Gemäß einer weiteren Ausführungsform ist die Bodenplatte dazu ausgebildet, eine Last bis zum Bruch der Bodenplatte von 4,5 t oder mehr, 4,6 t oder mehr, 4,7 t oder mehr, 4,8 t oder mehr, 4,9 t oder mehr, 5,0 t oder mehr, 5,1 t oder mehr, 5,2 t oder mehr, 5,3 t oder mehr, 5,4 t oder mehr oder 5,5 t oder mehr, zu tragen.

Unter der Last bis zum Bruch ist die nach dem Stempeldrucktest nach ISO R 1496 - 1 gemessene Last zu verstehen. Bei dem Stempeldrucktest wird eine Kraft über eine rechteckige Druckfläche der Maße 140 mm x 100 mm auf eine erfindungsgemäße Bodenplatte der Maße 500 mm x 500 mm x 27 mm ausgeübt, wobei die Bodenplatte auf zwei parallelen Stützen aufliegt, die einen Abstand von 300 mm voneinander aufweisen, bis die Bodenplatte bricht.

Gemäß einer weiteren Ausführungsform weist die Bodenplatte eine maximale Biegefestigkeit von 60 N/mm² oder mehr, insbesondere 70 N/mm² oder mehr, bevorzugt 80 N/mm² oder mehr, auf.

Gemäß einer weiteren Ausführungsform weist die Bodenplatte eine maximale Biegefestigkeit von 60 N/mm² oder mehr, 61 N/mm² oder mehr, 62 N/mm² oder mehr, 63 N/mm² oder mehr, 64 N/mm² oder mehr, 65 N/mm² oder mehr, 66 N/mm² oder mehr, 67 N/mm² oder mehr, 68 N/mm² oder mehr, 69 N/mm² oder mehr, 70 N/mm² oder mehr, 71 N/mm² oder mehr, 72 N/mm² oder mehr, 73 N/mm² oder mehr, 74 N/mm² oder mehr, 75 N/mm² oder mehr, 76 N/mm² oder mehr, 77 N/mm² oder mehr, 78 N/mm² oder mehr, 79 N/mm² oder mehr, 80 N/mm² oder mehr, 81 N/mm² oder mehr, 82 N/mm² oder mehr, 83 N/mm² oder mehr, 84 N/mm² oder mehr oder 85 N/mm² oder mehr, auf.

Dabei ist unter dem Begriff Biegefestigkeit die in einem Dreipunktbiegeversuch nach EN 310 ermittelte Biegefestigkeit zu verstehen.

Die für LKW-Bodenplatten geforderten maximalen Biegefestigkeiten liegen im Bereich von 60 N/mm² bis 70 N/mm².

Ein zweiter Aspekt der Erfindung betrifft ein Verfahren zur Herstellung einer Bodenplatte nach dem ersten Aspekt der Erfindung, wobei mit Kunstharz getränkte Papiere separat von der Mittellage, insbesondere zu einem High Pressure Laminate (HPL) oder einem Continuous Pressure Laminate (CPL), zum Bilden der Deckschicht verpresst werden, und wobei die Deckschicht nach dem Aushärten der Deckschicht mit der Mittellage verbunden, insbesondere verleimt, wird.

Das heißt, die harzgetränkten Papiere werden nicht wie nach dem Stand der Technik für HPL-beschichtete Sperrholzplatten üblich heiß auf die Holzoberfläche gepresst, so dass sich das Harz mit der Holzoberfläche verbindet und aushärtet, sondern die harzgetränkten Papiere werden getrennt von der Mittellage verpresst und ausgehärtet und anschließend z.B. durch Leimen mit Hotmelt-PUR-Klebstoff mit der Oberfläche der Mittellage verbunden.

Dies führt überraschenderweise zu einer besonders effektiven mechanischen Verstärkung der Bodenplatte durch die Deckschicht.

Gemäß einer Ausführungsform des Verfahrens wird die Oberfläche der Deckschicht aufgeraut, insbesondere mittels einer Sieblage.

Weitere Einzelheiten und Vorteile der Erfindung werden durch die nachfolgende Beschreibung von Ausführungsbeispielen an Hand von Figuren erläutert. Es zeigen:
- Fig. 1: eine schematische Schnittdarstellung einer ersten Ausführungsform der erfindungsgemäßen Bodenplatte mit einer Mittellage aus drei Massivholzschichten und einer Deckschicht;
- Fig. 2: eine schematische Schnittdarstellung einer zweiten Ausführungsform der erfindungsgemäßen Bodenplatte mit einer Mittellage aus drei Massivholzschichten und zwei Deckschichten;
- Fig. 3: eine schematische Schnittdarstellung einer dritten Ausführungsform der erfindungsgemäßen Bodenplatte mit einer Mittellage aus zwei Massivholzschichten und einer zusätzlichen Rohrsegmentschicht sowie einer Deckschicht;
- Fig. 4: eine perspektivische Darstellung einer Rohrsegmentschicht;
- Fig. 5: eine perspektivische Darstellung eines Rohres, aus dem Rohrsegmente der in Fig. 4 dargestellten Rohrsegmentschicht herstellbar sind.

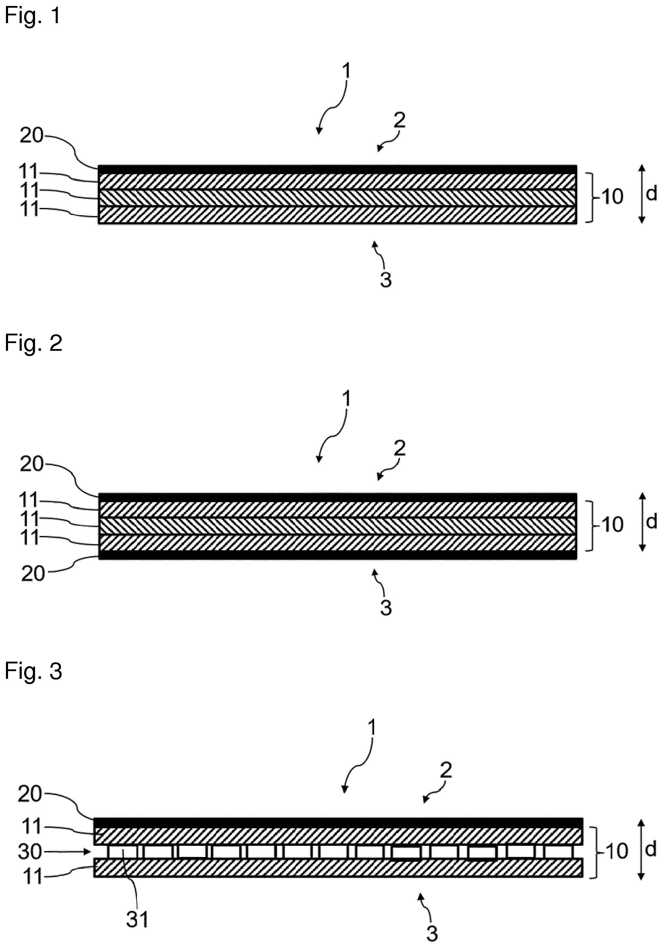

Fig. 1 zeigt eine erfindungsgemäße Bodenplatte 1 gemäß einer ersten Ausführungsform im Querschnitt. Die Bodenplatte 1 weist eine Mittellage 10 auf, die aus drei miteinander verleimten Massivholzschichten 11 gebildet ist. Dabei sind insbesondere die Faserrichtungen der benachbarten miteinander verbundenen Massivholzschichten 11 90° gedreht zueinander ausgerichtet. Das heißt, bei der Mittellage 10 handelt es sich insbesondere um eine sogenannte Dreischichtplatte. Die Mittellage 10 weist zwei gegenüberliegende Flächen 2,3 auf, wobei eine der Flächen 2 von einer Deckschicht 20 aus einem Kunstharz, insbesondere einem Phenol- oder Melaminharz bzw. aus HPL- oder CPL bedeckt ist. Die Deckschicht 20 dient dabei der mechanischen Verstärkung der Mittellage 10.

Natürlich kann die Mittellage 10 auch aus einer einzigen Massivholzschicht 11 oder aus einer anderen Anzahl an Massivholzschichten 11, insbesondere aus drei bis fünf Massivholzschichten 11, gebildet sein.

Die Bodenplatte 1 weist eine Dicke d senkrecht zu den Flächen 2,3 auf, wobei die Dicke d insbesondere 27 mm bis 65 mm beträgt.

Die Fläche 2 mit der Deckschicht 20 bildet insbesondere eine Auflagefläche für Ladung, wenn die Bodenplatte 1 als Laderaumboden verwendet wird. Dabei kann die Deckschicht 20 aufgeraut sein.

Die Massivholzschichten 11 sind insbesondere aus einem Holz gebildet, das eine relativ geringe Rohdichte bei gleichzeitig guten mechanischen Eigenschaften, das heißt insbesondere relativ hoher Biegefestigkeit, Zugfestigkeit und/oder hohem Elastizitätsmodul, aufweist. Hierfür kommen z.B. Holz der *Pinus sylvestris* (Gemeine Kiefer), *Hevea brasiliensis* (Rubberwood), *Liriodendron tulipifera* (Yellow Poplar), *Agathis australis* (Kauri) oder *Pinus radiata* (Monterey-Kiefer) in Frage. Selbstverständlich können auch andere geeignete Holzarten verwendet werden.

Fig. 2 zeigt eine erfindungsgemäße Bodenplatte 1 gemäß einer zweiten Ausführungsform im Querschnitt. Diese weist im Unterschied zu der in Fig. 1 gezeigten Bodenplatte 1 an beiden gegenüberliegenden Flächen 2,3 eine jeweilige Deckschicht 20 zur mechanischen Verstärkung der Bodenplatte 1 auf.

Fig. 3 zeigt eine erfindungsgemäße Bodenplatte 1 gemäß einer dritten Ausführungsform im Querschnitt. Diese unterscheidet sich von der in Fig. 1 gezeigten ersten Ausführungsform dadurch, dass die mittlere Massivholzschicht 11 der Mittellage 10 durch eine Rohrsegmentschicht 30 ersetzt ist. Stattdessen kann natürlich auch eine andere Massivholzschicht 11 durch die Rohrsegmentschicht 30 ersetzt sein.

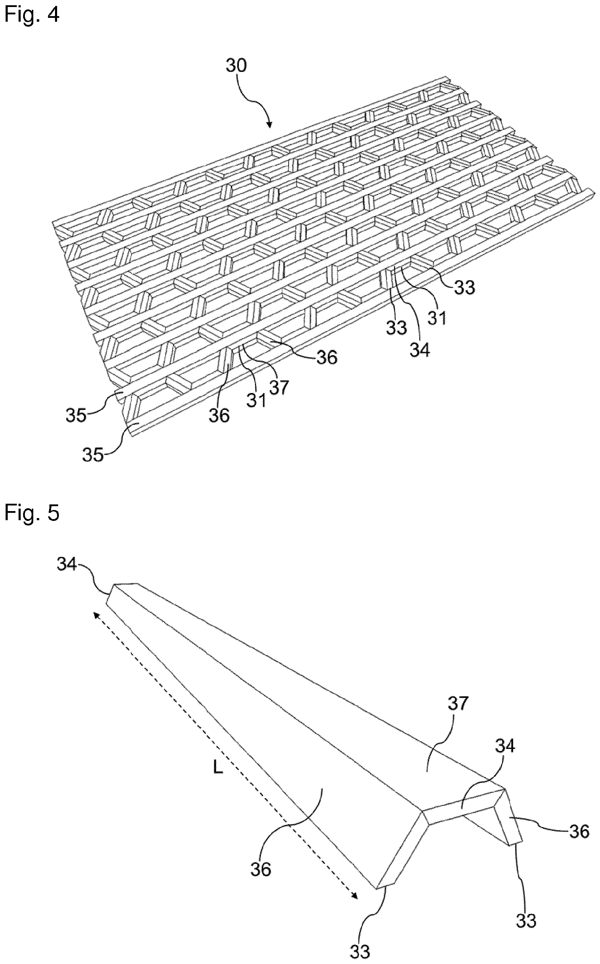

Ein Ausführungsbeispiel einer solchen Rohrsegmentschicht 30 ist in Fig. 4 perspektivisch dargestellt. Derartige Rohrsegmentschichten 30 sind z.B. dem Dokument WO 2017/021344 A1 beschrieben.

Die Rohrsegmentschicht 30 weist eine Mehrzahl an Reihen von Rohrsegmenten 31 auf, die jeweils zwischen zwei parallelen Stegbasen 35 angeordnet sind. Die Stegbasen 35 sind dabei durch Leisten aus einem Holzwerkstoff gebildet.

Die Rohrsegmente 31 sind jeweils durch ein Dachelement 36 und zwei mit dem Dachelement 36 verbundene Seitenelemente 37 gebildet, die in dem hier gezeigten Ausführungsbeispiel ein offenes trapezförmiges Profil bilden. Dabei verläuft das Dachelement 36 parallel zu den Stegbasen 35.

Das Dachelement 36 und die Seitenelemente 37 sind insbesondere jeweils aus einer Leiste aus einem Holzwerkstoff gebildet und die Seitenelemente 37 sind an Gehrungen mit dem Dachelement 36 verleimt.

Die Rohrsegmente 31 sind entlang einer Längserstreckungsrichtung erstreckt, wobei die Längserstreckungsrichtung L (s. Fig. 5) senkrecht zur Erstreckungsebene der Rohrsegmentschicht 30 verläuft.

In Fig. 5 ist ein Rohr dargestellt, aus denen derartige Rohrsegmente 31 durch Schneiden senkrecht zur Längserstreckungsrichtung L gebildet werden können. Natürlich können solche Rohrsegmente 31 auch auf andere Weise als durch Schneiden eines Rohres hergestellt werden.

In Umfangsrichtung bezüglich der Längserstreckungsrichtung L sind die Rohrsegmente 31 jeweils durch zwei Schnittenden 33 begrenzt, die mit einer jeweiligen Stegbasis 35 verbunden sind. Weiterhin sind die Rohrsegmente 31 in der Längserstreckungsrichtung (s. Fig. 5) durch zwei Schnittflächen 34 begrenzt.

In der Mittellage 10 (Fig. 3) ist sind die Rohrsegmente 31 der Rohrsegmentschicht 30 mittels ihrer Schnittflächen 34 mit den benachbarten Massivholzschichten 11 verbunden, insbesondere verleimt.

Für den Fall, dass die Rohrsegmentschicht 30 eine der äußeren Schichten der Mittellage 10 bildet, können die Schnittflächen 34 der Rohrsegmente 31 natürlich auch direkt mit einer Deckschicht 20 der Bodenplatte 1 verbunden, insbesondere verleimt, sein.

Die beschriebene Rohrsegmentschicht 30 weist ein sehr geringes Gewicht bei gleichzeitig hoher mechanischer Belastbarkeit auf. Je nach Anforderungen an Gewicht und mechanische Eigenschaften der Bodenplatte 1 können insbesondere eine oder mehrere Schichten der Mittellage 10 durch solche besonders leichten Rohrsegmentschichten 30 ersetzt werden.

Die Rohrsegmente 31 der in Fig. 4 gezeigten Rohrsegmentlage sind in Reihen zwischen zwei parallel zueinander verlaufenden Stegbasen 35 angeordnet. Dabei sind die Dachelemente 37 aneinander angrenzender Rohrsegmente 31 der jeweiligen Reihe an gegenüberliegenden Seiten angeordnet. Das heißt, die aneinander angrenzenden Rohrsegmente 31 sind spiegelsymmetrisch zu einer Achse angeordnet, die parallel zu den an die Reihe angrenzenden Stegbasen 35 zwischen den jeweiligen Stegbasen 35 verläuft. Die Dachelemente 37 sind dabei mit den jeweiligen Stegbasen 35 verbunden, insbesondere verleimt. Weiterhin berühren sich die Seitenelemente 36 der in der jeweiligen Reihe aneinander angrenzenden Rohrsegmente 31, wobei insbesondere die Seitenelemente 36 der in der jeweiligen Reihe aneinander angrenzenden Rohrsegmente 31 miteinander verbunden, insbesondere verleimt. Diese Konfiguration erhöht die mechanische Stabilität der Rohrsegmentlage 30.

Zum Testen der mechanischen Eigenschaften wurde eine Bodenplatte 1 gemäß der in Fig. 2 gezeigten Ausführungsform mit einer Mittellage 10 aus einer Dreischichtplatte aus Massivholz der *Liriodendron tulipifera* (Yellow Poplar) und zwei Deckschichten 20 aus High Pressure Laminate (HPL) verwendet. Die Dicke der HPL-Deckschichten 20 betrug dabei jeweils 1 mm. Die Gesamtdicke d der Bodenplatte 1 betrug 27 mm. Länge und Breite der Bodenplatte 1 betrugen jeweils 500 mm.

Diese Bodenplatte 1 wurde einem Biegeversuch nach den Vorgaben der ISO 1496 unterzogen. Dazu wurde die Bodenplatte 1 auf zwei parallelen Stützen positioniert, wobei der Abstand zwischen den Stützen 300 mm betrugt. Anschließend wurde die Bodenplatte 1 über eine Druckfläche der Abmessungen 140 mm x 100 mm belastet und die Last bis zum Bruch der Platte wurde bestimmt.

Es wurde eine Last von 5,50 t bis zum Bruch der erfindungsgemäßen Bodenplatte 1 gemessen.

Als Kontrollversuch wurde derselbe Bruchtest mit Multiplex-Platten der Dicke 27 mm aus Birkensperrholz mit 220 g/m² Phenolharzbeschichtung durchgeführt. Diese werden gemäß dem Stand der Technik als Laderaumböden für LKWs verwendet.

Hierbei wurden bei drei Proben Lasten von 4,16 t, 4,47 t und 4,50 t bis zum Bruch der jeweiligen Platte gemessen.

Im Vergleich zu Bodenplatten nach dem Stand der Technik lässt sich also mit der erfindungsgemäßen Bodenplatte eine um ca. 25 % höhere mechanische Stabilität (Last bis zum Bruch) bei ca. 30 % geringerem Gewicht (durch niedrigere Rohdichte des Yellow-Poplar-Massivholzes im Vergleich zu Birkensperrholz) erzielen.

Aufgrund der gemessenen Stabilität wird eine Biegefestigkeit der erfindungsgemäßen Bodenplatte von ca. 80 N/mm² bis 85 N/mm² vermutet, was deutlich über dem für LKW-Bodenplatten geforderten Wert von 60 N/mm² bis 70 N/mm² liegt.

Weiterhin wurden Dreipunktbiegeversuche nach EN 310 mit verschiedenen erfindungsgemäßen Bodenplatten 1 durchgeführt.

Dabei konnte eine Erhöhung der Biegefestigkeit der Bodenplatten um einen Faktor von 1,5 durch den Einsatz einer 0,5 mm HPL-Deckschicht nachgewiesen werden.

**Bezuaszeichenliste**

| | |
|---|---|
| 1 | Bodenplatte |
| 2,3 | Flächen |
| 10 | Mittellage |
| 11 | Massivholzschicht |
| 20 | Deckschicht |
| 30 | Rohrsegmentschicht |
| 31 | Rohrsegment |
| 33 | Schnittende |
| 34 | Schnittfläche |
| 35 | Stegbasis |
| 36 | Seitenelement |
| 37 | Dachelement |
| d | Dicke |
| L | Längserstreckungsrichtung |

## Patentansprüche

1. Bodenplatte (1) zur Verwendung als Laderaumboden, aufweisend eine Mittellage (10) und wenigstens eine Deckschicht (20) zur Verstärkung der Mittellage (10), wobei die Deckschicht (20) aus einem Kunstharz gebildet ist, **dadurch gekennzeichnet, dass** die Mittellage (10) wenigstens eine Massivholzschicht (11) aus Massivholz aufweist.

2. Bodenplatte (1) nach Anspruch 1, **dadurch gekennzeichnet, dass** das Massivholz eine Rohdichte von 890 kg/m³ oder weniger, insbesondere 750 kg/m³ oder weniger, aufweist.

3. Bodenplatte (1) nach Anspruch 1 oder 2, **dadurch gekennzeichnet, dass** das Massivholz eine Biegefestigkeit von 41 N/mm² oder mehr, insbesondere 55 N/mm² oder mehr, aufweist.

4. Bodenplatte (1) nach einem der vorhergehenden Ansprüche, **dadurch gekennzeichnet, dass** das Massivholz eine Zugfestigkeit von 21 N/mm² oder mehr, insbesondere 70 N/mm² oder mehr, aufweist.

5. Bodenplatte (1) nach einem der vorhergehenden Ansprüche, **dadurch gekennzeichnet, dass** das Massivholz einen Elastizitätsmodul von 4000 N/mm² oder mehr, insbesondere 6500 N/mm² oder mehr, aufweist.

6. Bodenplatte (1) nach einem der vorhergehenden Ansprüche, **dadurch gekennzeichnet, dass** die wenigstens eine Massivholzschicht (11) aus Massivholz der *Populus tremula, Picea abies, Agathis australis, Pinus sylvestris, Pinus radiata, Hevea brasiliensis, Populus nigra* oder *Liriodendron tulipifera,* insbesondere *Pinus sylvestris, Hevea brasiliensis, Liriodendron tulipifera, Agathis australis* oder *Pinus radiata,* bevorzugt *Pinus sylvestris, Hevea brasiliensis* oder *Liriodendron tulipifera,* gebildet ist.

7. Bodenplatte (1) nach einem der vorhergehenden Ansprüche, **dadurch gekennzeichnet, dass** die Bodenplatte (1) eine Dicke (d) von 27 mm bis 65 mm, insbesondere 35 mm bis 65 mm, aufweist.

8. Bodenplatte (1) nach einem der vorhergehenden Ansprüche, **dadurch gekennzeichnet, dass** die Deckschicht (20) durch ein High Pressure Laminate (HPL) oder ein Continuous Pressure Laminate (CPL) gebildet ist.

9. Bodenplatte (1) nach einem der vorhergehenden Ansprüche, **dadurch gekennzeichnet, dass** die Mittellage (10) eine Mehrzahl an miteinander verbundenen Massivholzschichten (11) aufweist.

10. Bodenplatte (1) nach einem der vorhergehenden Ansprüche, **dadurch gekennzeichnet, dass** die Mittellage drei bis fünf, insbesondere drei, miteinander verbundene Massivholzschichten (11) aufweist, wobei insbesondere die Faserrichtungen aneinander angrenzenden Massivholzschichten (11) 90° gedreht zueinander angeordnet sind.

11. Bodenplatte (1) nach einem der vorhergehenden Ansprüche, **dadurch gekennzeichnet, dass** die Mittellage (10) eine Rohrsegmentschicht (30) aufweist, die wenigstens ein Rohrsegment (31) aufweist, das in Umfangsrichtung des jeweiligen Rohrsegments (31) durch zwei Schnittenden (33) begrenzt ist, wobei das wenigstens eine Rohrsegment (31) entlang seiner Längserstreckungsrichtung (L) durch zwei Schnittflächen (34) begrenzt ist, und wobei die Schnittflächen (34) mit der wenigstens einen Massivholzschicht (11) verbunden sind.

12. Bodenplatte (1) nach Anspruch 11, **dadurch gekennzeichnet, dass** die Rohrsegmentschicht (30) wenigstens eine Stegbasis (35) aufweist, wobei die Schnittenden (33) des wenigstens einen Rohrsegments (31) mit der Stegbasis (35) verbunden sind.

13. Bodenplatte (1) nach einem der vorhergehenden Ansprüche, **dadurch gekennzeichnet, dass** die Bodenplatte (1) dazu ausgebildet ist, eine Last von 4,5 t oder mehr, insbesondere 5 t oder mehr, zu tragen.

14. Bodenplatte (1) nach einem der vorhergehenden Ansprüche, **dadurch gekennzeichnet, dass** die Bodenplatte (1) eine Biegefestigkeit von 60 N/mm² oder mehr, insbesondere 70 N/mm² oder mehr, aufweist.

15. Verfahren zur Herstellung einer Bodenplatte (1) nach einem der Ansprüche 1 bis 14, wobei mit Kunstharz getränkte Papiere separat von der Mittellage (10) zum Bilden der Deckschicht (20) verpresst werden, und wobei die Deckschicht (20) nach dem Aushärten mit der Mittellage (10) verbunden wird.
